# EUROPÄISCHE PATENTSCHRIFT

(11) **EP 2 467 282 B1**
(45) Veröffentlichungstag und Bekanntmachung des Hinweises auf die Patenterteilung: **13.08.2014**
(21) Anmeldenummer: 10754413.2
(22) Anmeldetag: 20.08.2010
(51) Int. Cl.: B60R 22/34

(54) **GURTAUFROLLER FÜR SICHERHEITSGURTE**
BELT RETRACTOR FOR SAFETY BELTS
ENROULEUR DE CEINTURE DE SÉCURITÉ

(30) Priorität: 22.08.2009 DE 102009038577; 22.08.2009 DE 102009038578
(43) Veröffentlichungstag der Anmeldung: 27.06.2012
(73) Patentinhaber: Adolf Föhl GmbH + Co. KG, 73635 Rudersberg (DE)
(72) Erfinder: WIER, Franz, 73571 Göggingen (DE); WIER, Isabel, 73527 Schwäbisch Gmünd (DE)
(74) Vertreter: DREISS Patentanwälte PartG mbB
(86) Internationale Anmeldenummer: PCT/EP2010/005122
(87) Internationale Veröffentlichungsnummer: WO 2011/023336

(56) Entgegenhaltungen:
- EP-A2- 1 637 413
- DE-A1- 4 023 662
- DE-A1- 4 438 308
- DE-U1- 20 012 528

## Beschreibung

Die Erfindung betrifft einen Gurtaufroller für Sicherheitsgurte von Kraftfahrzeugen mit einem Gehäuserahmen aus Kunststoff zur Aufnahme einer Gurtspule.

Gurtaufroller für Kraftfahrzeuge bestehen im Wesentlichen aus einer Gurtspule, zur Aufnahme des Gurtbandes und einem Gehäuserahmen, in dem diese Gurtspule gelagert ist. Ferner dient der Gehäuserahmen zur Befestigung des Aufrollers an der Fahrzeugkarosserie oder an Strukturteilen eines Fahrzeugsitzes. Dieser Gehäuserahmen ist üblicherweise als Blechbiegeteil ausgebildet und dient weiterhin zur Aufnahme und Befestigung der Bauteile der Sperreinrichtung, der-Antriebsfeder und weiterer - anwendungsspezifischer - Komponenten.

Aus der gattungsgemäßen EP 1 637 413 B1 ist es bekannt, den Gehäuserahmen für einen Gurtaufroller als Kunststoffbauteil herzustellen. Dazu soll dieser Gehäuserahmen als Spritzgussbauteil ausgeführt werden, wobei als Kunststoffmaterial ein fiberglasverstärkter thermoplastischer Werkstoff vorgesehen ist. Dieser Gehäuserahmen ist als geschlossener Rechteckrahmen ausgeführt, der auf einer Seite einen offenen Aufnahmeraum für die Antriebsfeder und auf der gegenüberliegenden Seite einen offenen Aufnahmeraum für die Komponenten der Sperreinrichtung aufweist. Die Gurtspule wird von einer offenen Stirnseite in dieses Gehäuse eingelegt, wobei die Baulänge der Gurtspule in Achsrichtung dazu geringer ist als der Abstand der beiden Seitenwände. Die Lagerung der Gurtspule erfolgt durch eine durchgesteckte Achse, die zusätzlich die Funktion eines Torsionsstabes aufweisen kann.

Aus der DE 40 23 662 A1 ist ein Gurtbandklemmer bekannt, der ein Gehäuse aus Kunststoff aufweist, in dem eine Wickelwelle mittels zweier Zapfen drehbar gelagert ist. Diese Art der Lagerung ist ausreichend, weil die Wickelwelle nur zum Aufwickeln des Gurtbands dient und nicht die bei einem Unfall auf das Gurtband wirkenden Kräfte übertragen muss.

Aus der DE 200 12 528 U1 ist ein Gurtaufroller bekannt, dessen U-förmiger Rahmen eine Abdeckung aufweist.

Aus der DE 44 38 308 A1 ist ein Gurtaufroller aus Kunststoff bekannt, der ein Basisteil und zwei Seitenrahmenteile umfasst und dem Oberbegriff des Anspruchs 1 entspricht. Das Basisteil und die Seitenrahmenteile werden in einem Stück als ebene Struktur gegossen oder gespritzt und dann U-förmig gebogen. Daher sind die Basisteil und die Seitenrahmenteile gelenkig miteinander verbunden.

Der Erfindung liegt die Aufgabe zugrunde, einen gattungsgemäßen Gurtaufroller für Sicherheitsgurte von Kraftfahrzeugen dahingehend zu verbessern, dass eine vereinfachte Montage der Gurtspule und deren verbesserte Lagerung möglich sind und/oder dass eine verdrehfeste Lastübertragung der Spule/des Sperrrads auf das Gehäuse ermöglicht werden kann. Dies wird durch einem Gurtaufroller gemäß Anspruch 1 gelöst.

Darüber hinaus soll der erfindungsgemäße Gurtaufroller in der Lage sein, alle aktuellen gesetzlichen Anforderungen hinsichtlich Haltbarkeit, Festigkeit und Bruchlast zu erfüllen. Dies gilt insbesondere für die Anforderungen an die statische und/oder dynamische Bruchlast bei geradem Gurtbandabzug. Die Erfüllung dieser Forderungen war unter anderem ein Grund dafür, dass Kunststoffe für Gehäuserahmen von Gurtaufrollern in der Serienentwicklung von Kraftfahrzeugen bisher nicht zum Einsatz kamen.

Dadurch dass der Gehäuserahmen des Gurtaufrollers als offener, U-förmiger Rahmen ausgebildet ist, an dessen offener Stirnseite eine Verstärkungsplatte aus Kunststoff befestigt ist, kann die Montage der Gurtspule von der offenen Stirnseite des U-förmigen Gehäuserahmens erfolgen. Die nach der Montage der Gurtspule angesetzte Verstärkungsplatte erhöht die Festigkeit eines derartigen Gehäuserahmens in dem Maße, bzw. kann die Festigkeit eines derartigen Gehäuserahmens in dem Maße zusätzlich erhöhen, wie er für die Anforderungen eines Gurtaufrollers für Kraftfahrzeuge erforderlich ist. Bei der Montage der Gurtspule kann der U-förmige Gehäuserahmen im elastischen Bereich aufgeweitet werden, so dass auch eine Gurtspule montiert werden kann, deren Breite größer als der Abstand der beiden gegenüberliegenden Gehäuseschenkel ist, um z.B. eine drehfeste Lastübertragung zum Gehäuserahmen zu ermöglichen.

Die Montage der Gurtspule wird noch einmal deutlich vereinfacht, weil der Gehäuserahmen auf seiner der Befestigungsstelle gegenüberliegenden Seite des mittleren Schenkels eine geringere Biegesteifigkeit aufweist. In diesem unteren Bereichs des mittleren Schenkels kann dann bei der Montage die größte Öffnungsweite erreicht werden, ohne den elastischen Verformungsbereich des Gehäuserahmens zu verlassen. Von diesem Bereich der größtmöglichen Aufweitung erfolgt dann die Montage der Gurtspule.

Erfindungsgemäß werden Gewicht, Volumen, Bauhöhe und Kosten des Gehäuserahmens vorteilhaft verringert, weil der mittlere Schenkel ausgehend von der Befestigungsstelle in seiner Dicke reduziert wird, und ausgehend von dem der Befestigungsöffnung benachbarten oberen Ende zum unteren Ende hin abnimmt.

Dadurch dass in dem Gehäuserahmen des Gurtaufrollers eine Anlagefläche für eine Sperrklinke ausgebildet werden kann, durch die der Schwenkweg der Sperrklinke begrenzt wird, kann eine kniehebelartige Verstärkung der vom Gehäuserahmen aufzunehmenden Last begrenzt werden. Die Hebelverhältnisse von Gurtspule bzw. der Sperrverzahnung und der Sperrklinke werden durch diese Anlagefläche so begrenzt, dass eine zunehmende Überstreckung verhindert wird, Eine kniehebelartige Kraftüberhöhung durch den sich vergrößernden Winkel der beiden Wirkhebelarme wird vermieden. Durch diese Anlagefläche kommt es darüber hinaus zu einer verbesserten Lastverteilung der über die Sperrklinke in den Gehäuserahmen eingebrachten Kräfte.

Die Lastaufnahme der über die Sperrklinke in den Gehäuserahmen eingetragenen Kräfte kann noch einmal deutlich verbessert werden, wenn die Sperrklinke auf ihrer der Stützfläche zugewandten Seite breiter ausgebildet ist. Diese Seite ist üblicherweise die der Sperrverzahnung abgewandte Seite und die Seite in der die Schwenkachse liegt. Eine breitere Stützfläche sorgt für eine verbesserte Lastverteilung an der Stützfläche. Eine verbreiterte Sperrklinke im Bereich der Stützfläche bei ansonsten unveränderter Dicke führt bei deutlich verbesserter Lastverteilung nur zu einer geringen Massenzunahme der Sperrklinke insgesamt. Die Massenzunahme liegt darüber hinaus im Bereich der Schwenkachse, so dass die Massenträgheit nicht übermäßig erhöht wird.

Die Lasteinleitung in die Fahrzeugkarosserie und die Belastung des Gehäuserahmens werden erheblich verbessert, wenn die Sperrklinke so angeordnet ist, dass sie sich zwischen der Achse der Gurtspule und der Befestigungsstelle des Gurtaufrollers befindet. Dadurch ist insbesondere eine sehr direkte Krafteinleitung möglich. Eine verstärkte Ausbildung des Gehäuses wird dadurch auf einen relativ geringen Bereich des Gehäuserahmens beschränkt, so dass Volumen und Masse des Gehäuserahmens klein bleiben.

Die Steifigkeit des Gehäuserahmens und dessen Bruchfestigkeit werden in vorteilhafter Weise verbessert, wenn an dem Gehäuserahmen ein verstärkter Bereich ausgebildet ist, der die Stützfläche für die Sperrklinke und den Befestigungsabschnitt verbindet. Die Krafteinleitung von der Gurtspule über die Sperrklinke und den Gehäuserahmen in die Fahrzeugkarosserie wird dadurch verbessert.

Als eine Ausführungsform der Erfindung wird ein Gurtaufroller für Sicherheitsgurte von Kraftfahrzeugen mit einem Gehäuserahmen aus Kunststoff zur Aufnahme einer Gurtspule zur Verfügung gestellt, wobei der Gehäuserahmen als offener, U-förmiger Rahmen ausgebildet ist, dessen offene Stirnseite und oder lichte Weite der beiden Seitenwände deutlich schmäler ist als die zugehörige Gurtspule und an der Stirnseite eine Verstärkungsplatte befestigt ist

In einer weiteren erfindungsgemäßen Ausführungsform wird ein Gurtaufroller zur Verfügung gestellt, wobei der mittlere Schenkel zumindest partiell mit einer Wabenstruktur und oder mit Verrippungen versehen ist. Gemäß einer beispielhaften Ausführungsform der Erfindung wird ein Gurtaufroller zur Verfügung gestellt, wobei der Spulenkörper mit oder ohne Verzahnung aus faserverstärktem Kunststoff hergestellt ist.

Gemäß einer beispielhaften Ausführungsform der Erfindung wird ein Gurtaufroller zur Verfügung gestellt, wobei zumindest eine der kreisförmigen Vertiefungen mit einer Verzahnung versehen ist.

Gemäß einem weiteren Ausführungsbeispiel der vorliegenden Erfindung wird ein Gurtaufroller zur Verfügung gestellt, wobei der mittlere Schenkel und/oder zumindest einer der seitlichen Schenkel des Gehäuserahmens mit Vorsprüngen und/oder Rastelementen zur Verdrehsicherung und/oder zur Lastaufnahme und/oder zur Reduzierung von Vibrationen versehen ist.

Weitere Vorteile und vorteilhafte Ausgestaltungen der Erfindung ergeben sich aus den Unteransprüchen und der Beschreibung.

Ein Ausführungsbeispiel der Erfindung ist in der nachfolgenden Beschreibung und Zeichnung näher erläutert.

Letztere zeigt in
- Fig.1: eine perspektivische Darstellung des erfindungsgemäßen Gurtaufrollers,
- Fig. 2: einen Querschnitt durch den erfindungsgemäßen Gurtaufroller,
- Fig. 3: eine erste perspektivische Darstellung des Gehäuserahmens,
- Fig. 4: eine zweite perspektivische Darstellung des Gehäuserahmens,
- Fig. 5: eine Ansicht der Rückseite des mittleren Gehäuseschenkels,
- Fig. 6: einen Längsschnitt durch den Gehäuserahmen,
- Fig. 7: eine perspektivische Ansicht einer zweiten Variante des Gehäuserahmens,
- Fig. 8: eine perspektivische Ansicht einer weiteren Variante des Gehäuserahmens, der zum Montieren der Spule nicht aufgebogen werden muss,
- Fig. 9: Spule 14/1 ohne kranzartige Gurtstege 20 und 21, um eine seitliche Montage in den Gehäuserahmen zu ermöglichen,
- Fig. 10: einen Querschnitt durch den erfindungsgemäßen Gurtaufroller im Bereich der Sperrklinke,
- Fig. 11: einen Längsschnitt durch den erfindungsgemäßen Gurtaufroller im Bereich der Sperrklinke,
- Fig.12: eine perspektivische Ansicht eines Teiles aus Kunststoff, das einstückig ein Straffergehäuse 101 und Gehäuserahmen 10 vereint.
- Fig.13: eine Draufsicht eines Teiles aus Kunststoff, das einstückig ein Straffergehäuse 101 und Gehäuserahmen 10 vereint.

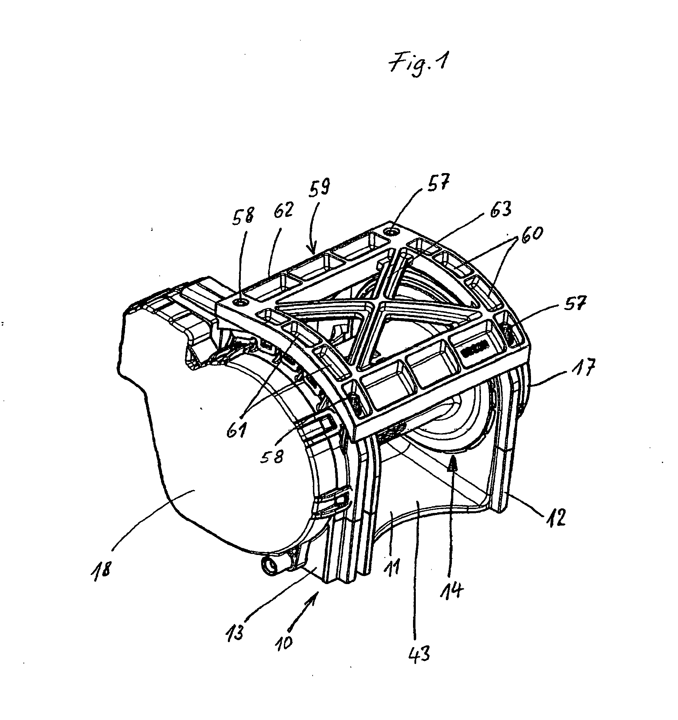

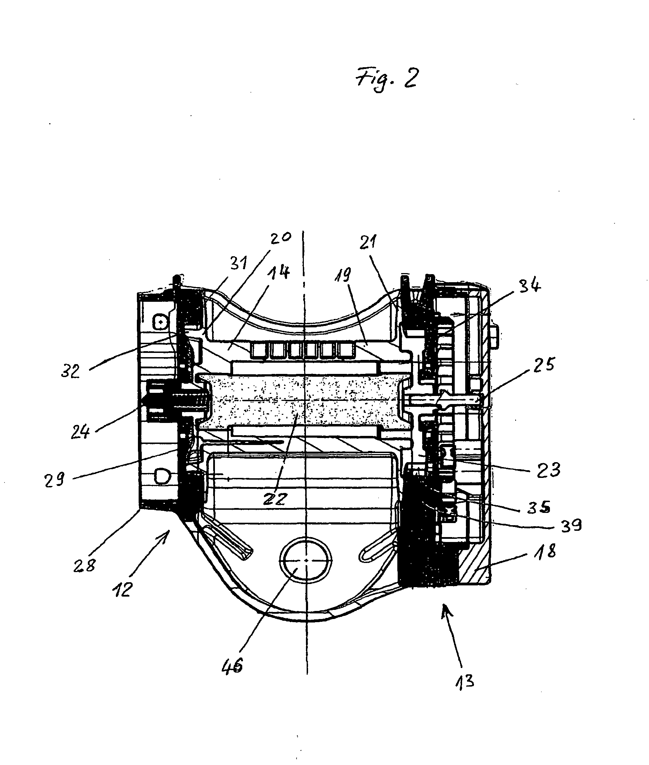

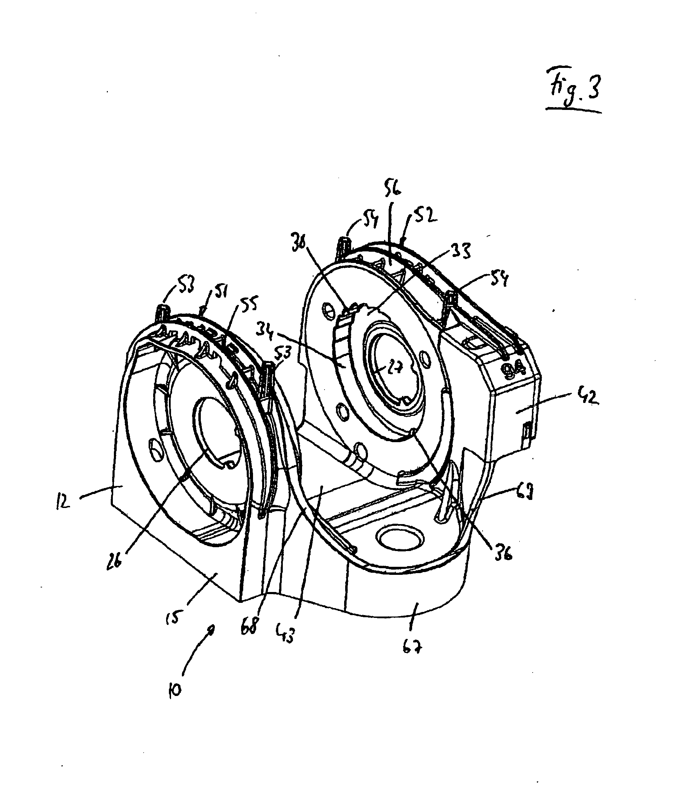

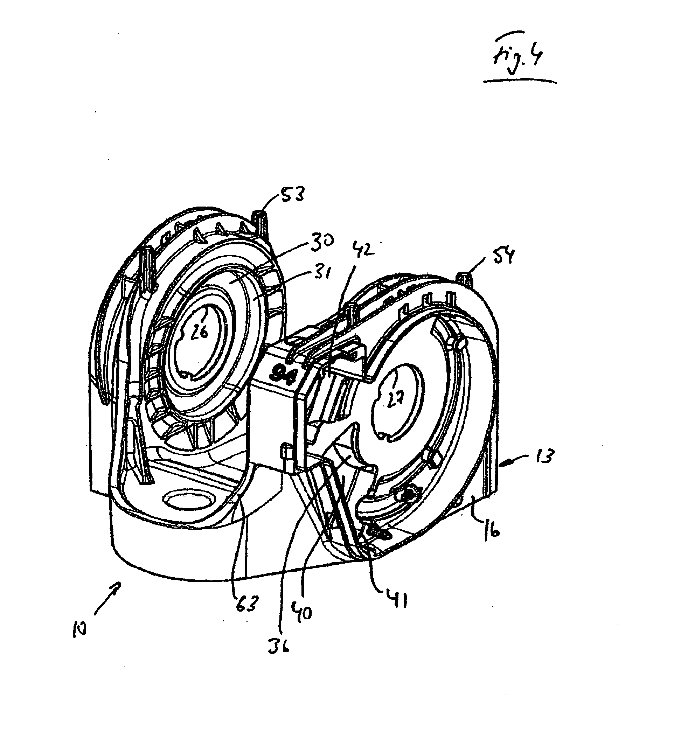

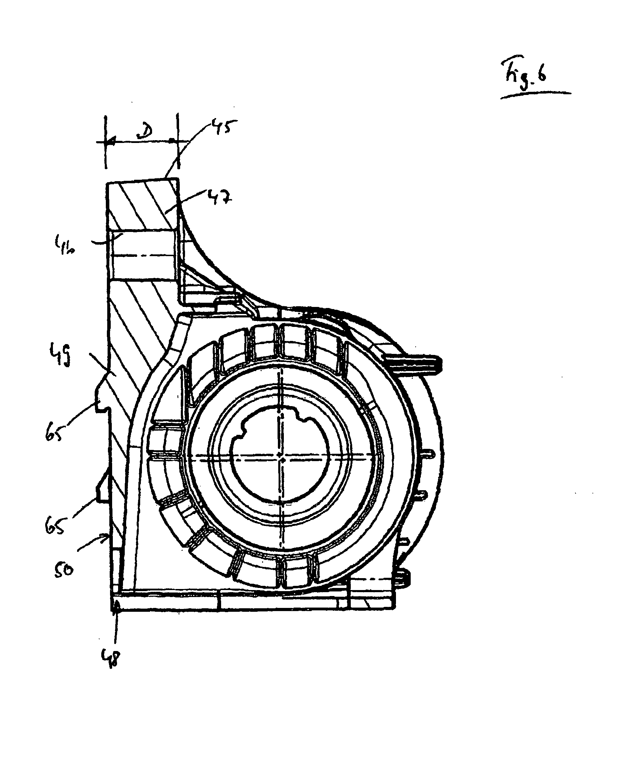

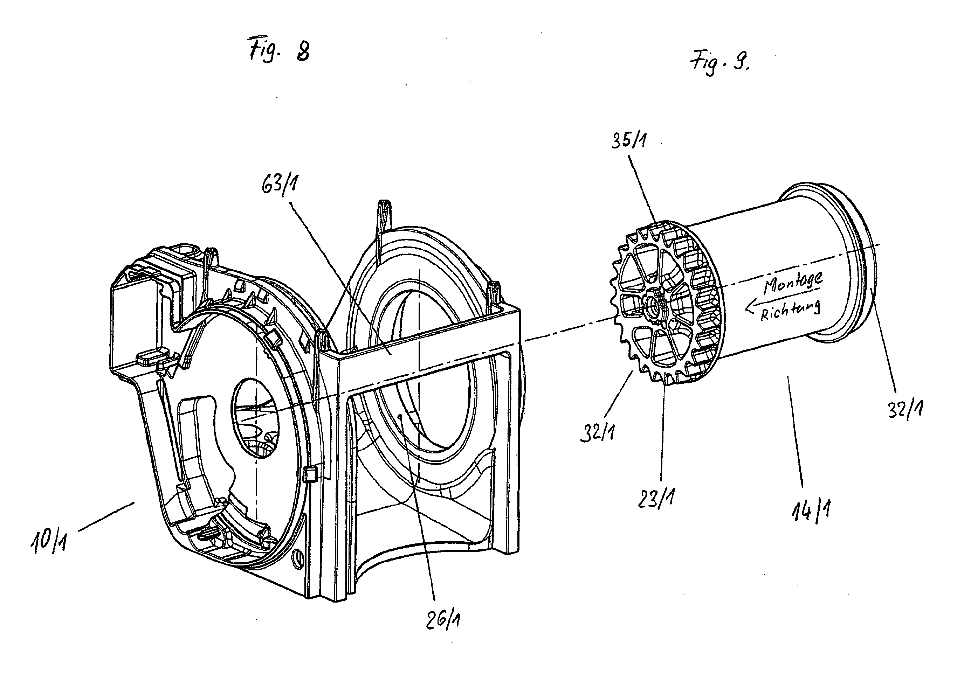

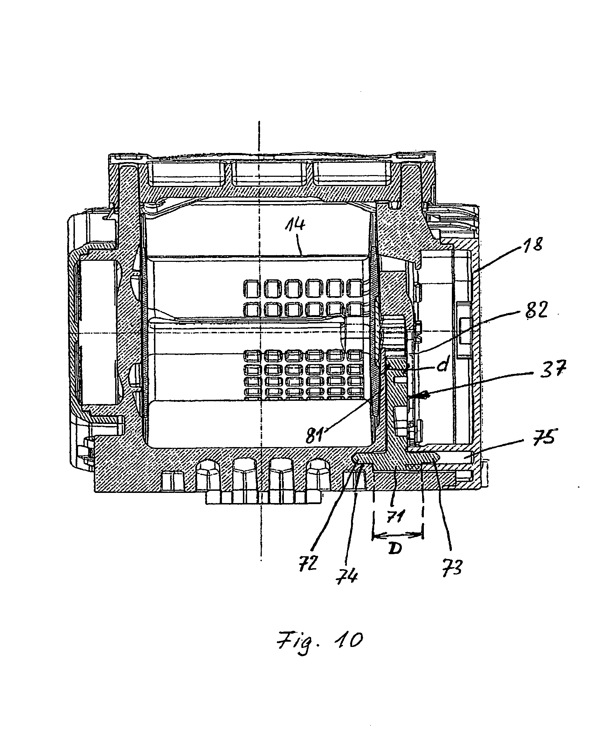

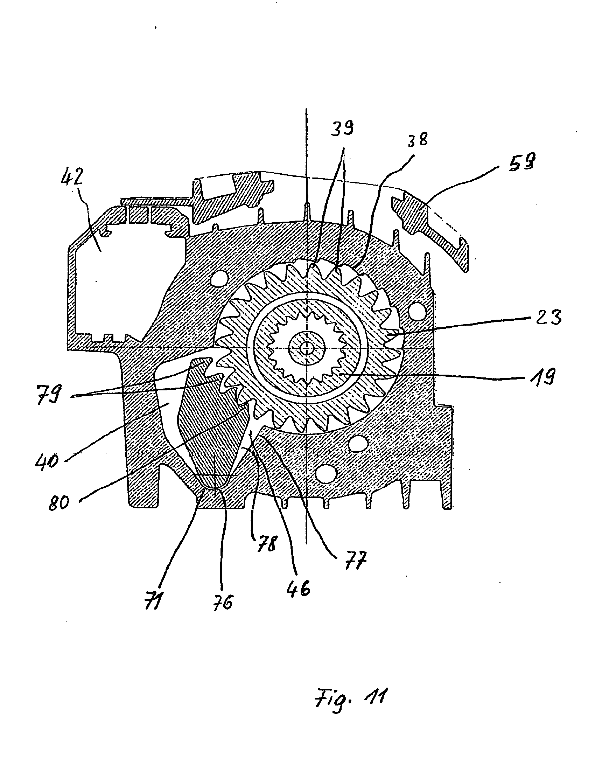

Der in den Figuren 1 bis 13 dargestellte Gurtaufroller hat einen Gehäuserahmen 10, der U-förmig ausgebildet ist, und einen als Grundplatte ausgebildeten mittleren Schenkel 11 sowie zwei seitliche Schenkel 12 und 13. In diesem Gehäuserahmen ist eine Gurtspule 14 drehbar gelagert. Die beiden Außenseiten 15 und 16 der seitlichen Schenkel 12 und 13 sind durch Gehäusedeckel 17 und 18 verschlossen.

Die Gurtspule besteht in an sich bekannte Weise aus einem Spulenkörper 19 und zwei kranzartigen Gurtstegen 20 und 21. Im Inneren des Spulenkörpers 19 ist ein Torsionsstab 22 angeordnet, der auf einer Seite drehfest mit der Gurtspule verbunden ist. Die andere Seite des Torsionsstabes 22 ist mit einem seitlich an der Gurtspule geführten Sperrrad 23 verbunden. Die Lagerung der Gurtspule in normalen Betrieb erfolgt an der einen Stirnseite über einen gefederten Lagerstift 24, der in einer Lageraufnahme des Gehäusedeckels. Zur Durchführung der Lagerstifte 24 und 25 weisen die beiden seitlichen Schenkel 12 und 13 jeweils eine Öffnung 26 und 27, deren Durchmesser wesentlich kleiner als der Durchmesser der Gurtstege 20 und 21 ist.

In einer alternativen Ausführungsform kann im Inneren des Spulenkörpers 19 ein Torsionsstab 22 angeordnet sein, der auf einer Seite drehfest mit der Gurtspule verbunden ist. Die andere Seite des Torsionsstabes 22 ist mit einem seitlich an der Gurtspule geführten Sperrrad 23 verbunden. Ist die Spule ohne Torsionsstab, ist es eine bekannte Form von Spule, ohne Kraftbegrenzung. Äußerlich ähnlich den Spulen 14 und 14/1, diese können an beiden Außenseiten mit oder ohne ringförmige Kränze 32, ausgeführt sein, haben jedoch vorzugsweise beidseitig eine Verzahnung ähnlich wie es das Sperrrad 23 aufweist. Da bei Spulen ohne Kraftbegrenzung höhere Drehmomente auf das Gehäuse übertragen werden, wird vorzugsweise durch die 2. Verzahnung das Drehmoment auch auf den 2. seitlichen Schenkel 12, 13 verteilt, der eine passende Gegenverzahnung zur Spule beinhaltet. Bei einer Kraftbegrenzer-Version wird das Drehmoment nur einseitig aufgenommen. Die Lagerung der Gurtspule in normalen Betrieb erfolgt an der einen Stirnseite über einen gefederten Lagerstift 24, der in einer Lageraufnahme des Gehäusedeckels. Zur Durchführung der Lagerstifte 24 und 25 weisen die beiden seitlichen Schenkel 12 und 13 jeweils eine Öffnung 26 und 27, deren Durchmesser kleiner als der Durchmesser der Gurtstege 20 und 21 ist.

Auf der Außenseite des seitlichen Schenkels 12 ist ein umlaufender Gehäuserand 28 ausgebildet. Diese bildet zusammen mit der Wandung 29 des seitlichen Schenkels 12 einen Aufnahmeraum für eine nicht dargestellte Antriebsfeder, die über den Lagerstift 24 mit der Gurtspule verbunden ist. Der durch den Gehäuserand 28 und die Wandung 29 des seitlichen Schenkels gebildete Aufnahmeraum für die Antriebsfeder wird durch den Deckel 17 verschlossen, der aus Gewichtsgründen ebenfalls aus Kunststoff gefertigt ist.

An der Innenseite des seitlichen Schenkels 12 ist eine kreisförmige Vertiefung 30 ausgebildet, deren umlaufender Rand 31 die Öffnung 26 zentrisch umgibt. Diese Vertiefung 30 dient zur Aufnahme eines flanschartigen, ringförmigen Kranzes 32 an der Außenseite der Gurtspule 14.

Die gegenüberliegende Innenseite des zweiten seitlichen Schenkels 13 weist ebenfalls eine kreisförmige Vertiefung 33 mit einem umlaufenden Seitenrand 34, wahlweise mit oder ohne Verzahnung, auf. Diese Vertiefung dient zur Aufnahme eines flanschartig ausgebildeten ringförmigen Randes 35 des Sperrrades. Der Seitenrand 34 ist mit einem Durchbruch 36 versehen, durch den eine auf der Außenseite des Schenkels gelagerte Sperrklinke 37 in das Innere des Gehäuserahmens bzw. der kreisförmigen Vertiefung 33 ragt. Auf der radial gegenüberliegenden Seite ist der Seitenrand 34 der Vertiefung 33 mit einer Verzahnung 38 versehen.

Die in die Vertiefung 33 ragende Sperrklinke 37 wirkt bei entsprechender Ansteuerung mit einer außenseitigen Verzahnung 39 der Sperrrades 23 zusammen. Unter Last wird dann die Gurtspule durch die auftretenden Hebelwirkungen in die Verzahnung 38 der Gehäusewand verschoben. In einer alternativen Ausführungsform wird unter ruckartiger Last dann die Gurtspule direkt oder durch die auftretenden Hebelwirkungen, die vom Sperrvorgang ausgelöst wurden, in die Verzahnung 38 der Gehäusewand verschoben.

Die gegenüberliegende Vertiefung 30 kann ebenfalls mit einer Verzahnung versehen werden, vorzugsweise dann, wenn auf einen Torsionsstab verzichtet wird. In diesem Fall wird der Rand der Gurtspule ebenfalls mit einer entsprechenden Gegenverzahnung versehen.

An der Außenseite des seitlichen Schenkels 13 ist im Bereich des Durchbruches 36 ein Aufnahmeraum 40 ausgebildet, der zur Aufnahme der Sperrklinke 37 dient. Die Wandung des Aufnahmeraums 40 ist so ausgebildet, dass sie eine Abstützfläche 41 für die Sperrklinke 37 bildet.

Der seitliche Schenkel 13 weist zusätzlich einen weiteren Aufnahmeraum 42 auf, der zur Unterbringung des nicht näher dargestellten mechanischen Sensors dient.

Der als Grundplatte ausgebildete mittlere Schenkel 11 hat auf seiner der Gurtspule 14 zugewandten Seite eine geschlossene Oberfläche 43 und auf weist auf der gegenüberliegenden Seite eine offene Wabenstruktur 44 zur Verstärkung und Versteifung auf. Darüber hinaus ist am oberen Ende 45 des mittleren Schenkels ein kreisförmiger Durchtritt 46 ausgebildet, die zur Aufnahme bzw. zur Durchführung der zur Befestigung dienenden Verschraubung dient. Der Durchtritt 46 ist von einem massiv ausgeführten Rand 47 umgeben. Die Dicke des mittleren Schenkels hat im Bereich des oberen Endes bzw. des ringförmigen Randes 47 ihr größtes Ausmaß D und nimmt in Richtung unteres Ende 48 kontinuierlich ab. Ausgehend von einem Bereich gleicher Dicke D um den Durchtritt 46 und den massiven Rand 47 herum reduziert sich die Dicke des mittleren Schenkels in Richtung unteres Ende. Die Kontur des mittleren Schenkels hat dabei ausgehend von dem Bereich gleicher Dicke D einen bogenförmigen, an die Kontur der Gurtspule angepassten mittleren Bereich 49, der in einen annähernd linear in seiner Dicke abnehmenden unteren Bereich 50 übergeht.

Die Dicke D des mittleren Schenkels beträgt im Bereich des kreisförmigen Durchtrittes mindestens 10mm. Der Abstand der Mittelachse des kreisförmigen Durchtritts 46 zur oberen Kante beträgt vorteilhafterweise mindestens 15mm oder mindestens 10mm bis 15mm. Am unteren Ende des mittleren Schenkels kann dessen Dicke auf 4mm oder darunter reduziert werden.

Durch die relativ große Dicke des mittleren Schenkels im oberen Bereich ist es auch möglich, den Durchtritt 46 für die Verschraubung mit einem Gewinde zu versehen, so dass eine Gewindeausbildung oder die Anbringung einer Gewindemutter an der Fahrzeugkarosserie entfällt.

Durch die Reduzierung der Dicke des mittleren Schenkels lässt sich der U-förmige Gehäuserahmen im Bereich des unteren Endes 48 stärker elastisch aufweiten als im Bereich des oberen Endes 45, der für die Aufnahme der Befestigungskräfte verstärkt ausgebildet ist. Von dem bei der Montage stärker aufgeweiteten unteren Ende des Gehäuserahmens wird die Gurtspule 14 eingeführt, so dass der Kranz 32 der Gurtspule und der Rand 35 des Sperrrades 23 in den kreisförmigen Vertiefungen 30 und 33 aufgenommen wird. Nach Einsetzen der Gurtspule und Entfernen des Montagewerkzeuges nehmen die seitlichen Schenkel 12 und 13 wieder ihre Ausgangslage ein, in der die Gurtspule in axialer Richtung fixiert ist.

Die dem mittleren Schenkel 11 gegenüberliegenden Stirnseiten 51 und 52 der beiden seitlichen Schenkel weisen jeweils zwei Befestigungsstifte 53 und 54 sowie radial verlaufende Vertiefungen 55 und 56 auf. Die Befestigungsstifte 53 und 54 korrespondieren mit Befestigungsöffnungen 57 und 58 einer Verstärkungsplatte 59 durch die im endmontierten Zustand die offene Stirnseite des U-förmigen Gehäuserahmens verschlossen wird. Diese Verstärkungsplatte weist eine Reihe von Vorsprüngen 60, 61 auf, die mit den Vertiefungen 55 und 56 in den Stirnseiten der Schenkel korrespondieren. Zur Erhöhung der Steifigkeit ist die Verstärkungsplatte bogenförmig ausgebildet und weist die Form einer Mantelfläche auf, die die Gurtspule radial umgibt. Die Verstärkungsplatte besteht im Wesentlichen aus einem rechteckigen Rahmen 62, der in Umfangsrichtung der Gurtspule gewölbt ist. Zur Erzielung einer ausreichenden Steifigkeit ist der Rahmen 62 mit einem X-förmig ausgebildeten Verstärkungssteg 63 versteift.

Zur Verbesserung der Montage im Fahrzeug und um ein Verdrehen des Gurtaufrollers um den Verschraubungspunkt unter Last zu vermeiden, sind an der Rückseite 64 des mittleren Schenkels hakenartige Vorsprünge 65 ausgebildet, die mit entsprechenden Öffnungen in der Fahrzeugkarosserie korrespondieren. Diese Vorsprünge können gleichzeitig als Montagehilfe dienen, mit deren Hilfe der Gurtaufroller in die Fahrzeugkarosserie eingehängt wird.

Diese Vorsprünge 65 können darüber hinaus so ausgelegt werden, dass sie lasttragend sind, d. h. dass über diese Vorsprünge Lasten in die Fahrzeugkarosserie eingeleitet werden können. Somit kann der Verschraubungspunkt des Gurtaufrollers noch einmal entlastet werden.

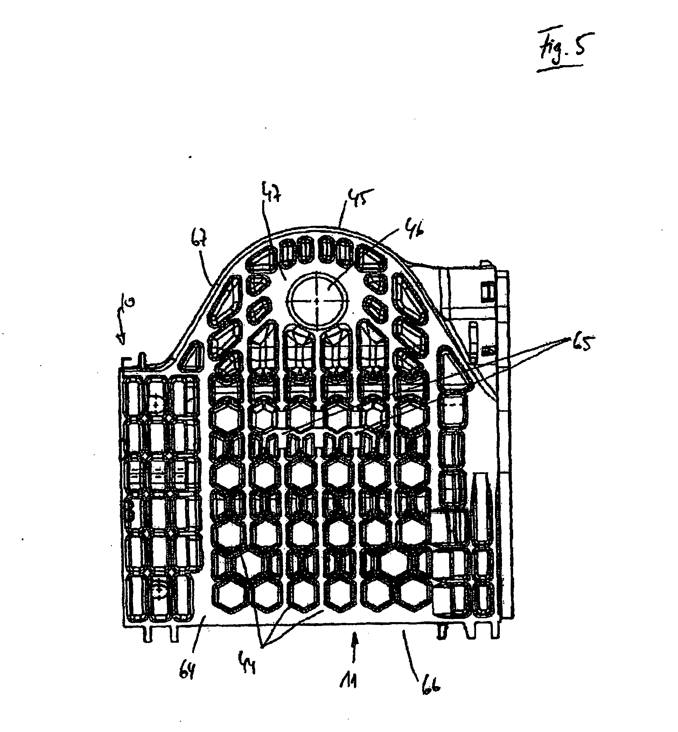

Der mittlere Schenkel 11 kann an seinem unteren Ende 48, wie in Figur 5 dargestellt, eine die beiden seitlichen Schenkel verbindende gerade Kante 66 aufweisen. Es ist jedoch auch möglich, diese Kante 66 bogenförmig auszubilden, so wie in Figur 1 dargestellt, wobei der Bogen sich in Richtung Befestigungsstelle erstreckt. Durch diesen bogenförmigen Verlauf kann einerseits das Gewicht des Gehäuserahmens reduziert werden, andererseits wird der Widerstand gegen Aufbiegen bei der Montage der Gurtspule noch einmal reduziert.

Um den Durchtritt 46 und dessen massiven Rand 47 verläuft die Kante 67 des mittleren Schenkels 11 ausgehend von den seitlichen Schenkeln bogenförmig nach außen gewölbt. Die Länge des mittleren Schenkels gemessen zwischen dessen unterem Ende 48 und dem oberen Ende 45 ist größer als die entsprechende Länge der seitlichen Schenkel. Die bogenförmige Kante 67 ist vorzugsweise geschlossen ausgebildet. Von dieser Kante verlaufen bogenförmige Übergänge 68 und 69 in die seitlichen Schenkel, die die Steifigkeit des Gehäuserahmens in dessen oberen Bereich erhöhen. Die bogenförmigen Übergänge haben vorteilhafterweise einen Radius von mindestens 10mm.

Der Rahmen und die Verstärkungsplatte bestehen aus Kunststoff, der zur Erhöhung der Festigkeit beispielsweise mit Glasfasern verstärkt ausgeführt wird. Hierbei sind insbesondere so genannte Langglasfasern bevorzugt.

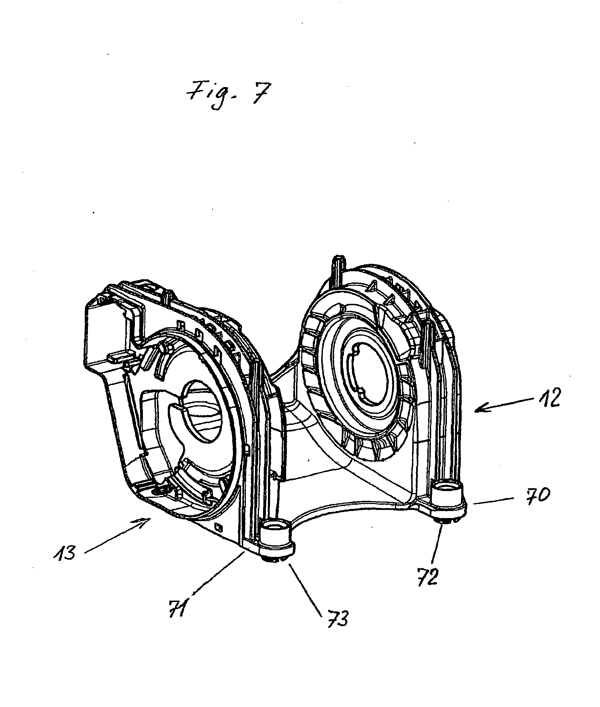

Die in Figur 7 dargestellte Variante des Gehäuserahmens unterscheidet sich von der zuvor beschriebenen durch zusätzliche Befestigungselemente, mit den der Gurtaufroller an der Fahrzeugkarosserie befestigt werden kann. Auf der der Befestigungsstelle gegenüberliegenden Seite weisen die seitlichen Schenkel 12 und 13 jeweils einen Vorsprung 70, 71 auf, der sich in einer Ebene mit dem mittleren Schenkel befindet. Diese Vorsprünge ragen über in diesem Ausführungsbeispiel über das untere Ende des mittleren Schenkels hinaus. An diesen Vorsprüngen sind Rastelemente 72, 73 ausgebildet, die einstückig mit dem Gehäuserahmen ausgebildet sind. Diese Rastelemente greifen in nicht dargestellte Aufnahmeöffnungen der Fahrzeugkarosserie bzw. am Einbauort ein und dienen sowohl als zusätzliche Verdrehsicherung als auch als zusätzliche Lastaufnahmeelemente, durch die die an der oberen Befestigungsstelle auftretenden Lasten reduziert werden können. Zusätzlich kann mit diesen zusätzlichen Befestigungselementen das Schwingungsverhalten des eingebauten Gurtaufrollers in der Fahrzeugumgebung verbessert werden. Die Anordnung der Rastelement 72, 73 ist hier nur beispielhaft. Diese können auch an anderer Stelle der der Fahrzeugkarosserie zugewandten Seite der seitlichen Schenkel oder des mittleren Schenkels ausgebildet sein. Die hier dargestellte Anordnung hat den Vorteil, dass sich zusammen mit der Verschraubung im Bereich des Durchtritts 46 ein dreipunktartige Auflage bzw. Befestigung ergibt, die besonders stabil ist und im Hinblick auf ihre schwingungstechnischen Eigenschaften vorteilhaft ist.

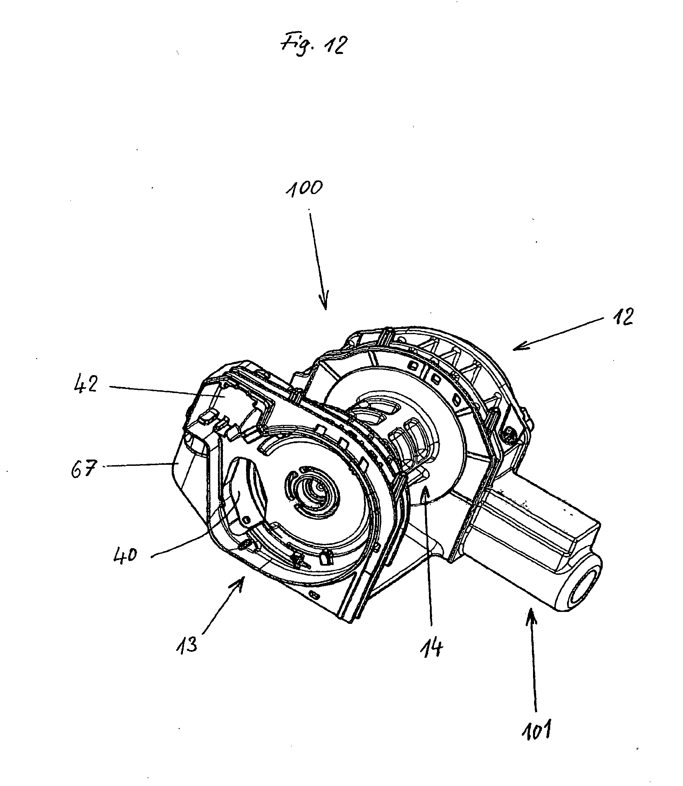

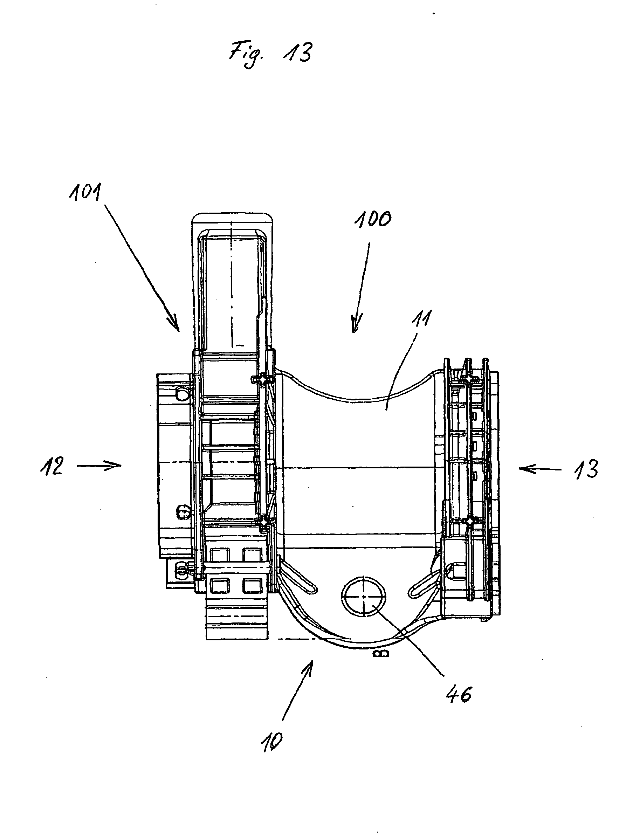

Die in Figur 12 und 13 dargestellten alternativen Ausführungsformen des Gehäuserahmens 10 unterscheiden sich von der zuvor beschriebenen durch die zusätzliche Funktion, eine z.B. bekannte Gurt-Straffeinheit 101 mit dem Gehäuserahmen 10 einstückig auszubilden. Der Vorteil ist eine erhebliche Gewichts- und Kostenersparnis gegenüber bekannten Gurtstraffer-Systemen. Diese Ausführungsformen sind daher z.B. extrem wichtig bei sitzintegrierten Systemen, um einen hohen Schwerpunkt in der Sitzlehne zu vermeiden, oder für gewichtsoptimierte Fahrzeuge.

Die Sperrklinke 37 hat einen verzahnten Kopfabschnitt 70, der mit der Verzahnung 39 des Sperrrades zusammenwirkt. Der gegenüberliegende Fußabschnitt 71 hat zwei einstückig angeformte Lagerzapfen 72, 73. Einer der beiden Lagerzapfen ist in einer Lagerbohrung 74 des Gehäuserahmens geführt. Der gegenüberliegende Lagerzapfen ist in einer Lagerbohrung 75 des Gehäusedeckels 18 geführt. Anstelle der einstückigen Ausbildung ist es auch möglich, eine durchgehende Lagerachse als separates Bauteil auszuführen. Die Sperrklinke kann auch mit Lagerbohrungen versehen sein, in die entsprechende Lagerzapfen am Gehäuse und dem Gehäusedeckel oder eine durchgesteckte Achse gesteckt werden.

Der Fußabschnitt 71 der Sperrklinke ist breiter ausgebildet als der Kopfabschnitt 70. Die Dicke D des Fußabschnittes ist in diesem Ausführungsbeispiel etwa doppelt so groß wie die Dicke d des Kopfabschnittes. Die Dicke d des Kopfabschnittes ist abhängig von den gewählten Materialien der Sperrklinke und den aufzunehmenden Maximalkräften und beträgt in diesem Ausführungsbeispiel 4,4mm. Abhängig von der Dicke d des Kopfabschnittes 70 ist die Öffnungsbreite des Durchtritts 36. Diese Öffnungsbreite ist so an die Dicke d des Kopfabschnittes angepasst, dass die Sperrklinke berührungsfrei durch diesen Durchtritt ragt. Die Seitenwände 81, 82 des Durchtritts dienen zusätzlich dazu, dass bei starken Beschleunigungen bzw. Kräften in Querrichtung die Sperrklinke geführt wird. Somit bleibt die Überdeckung der zusammenwirkenden Verzahnungen in jedem Betriebszustand erhalten.

Der Aufnahmeraum 40 für die Sperrklinke hat eine Stützfläche 76, die dem kreisbogenförmigen Fußabschnitt 71 zugewandt ist. Die Stützfläche ist im Längsschnitt durch den Gurtaufroller ebenfalls kreisbogenförmig und umgibt den Fußabschnitt mit geringem Abstand. Der Abstand zwischen der Stützfläche 76 und dem Fußabschnitt 71 ist so gewählt, dass die Stützklinke ohne Kontakt zur Stützfläche verschwenken kann, sofern keine Last von der Gurtspule bzw. dem Sperrrad auf die Sperrklinke übertragen wird. Unter Last können sich die Lagerbohrungen bzw. die Lagerzapfen elastisch verformen, so dass der Fußabschnitt zur Anlage an die Stützfläche gelangt und diese die erhöhten Lagerkräfte aufnehmen kann.

Die in Schwenkrichtung der Sperrklinke liegende Wandung des Aufnahmeraums 40 ist als Anlagefläche 77 ausgebildet. Die Neigung der Anlagefläche 77 ist so gewählt, dass die zugewandte Seitenfläche 78 der Sperrklinke flächig zur Anlage kommt, wenn alle Verzahnungen 79 der Sperrklinke mit der Verzahnung des Sperrrades in Eingriff sind.

Beim Verschwenken der Sperrklinke aus ihrer Ruhelage gelangt ein erster Zahn 80 von vier Zähnen der Verzahnung 79 in Eingriff mit der Verzahnung des Sperrrades. Durch weiteres Verdrehen der Gurtspule bzw. des Sperrrades wird die Sperrklinke weiter verschwenkt, so dass auch die anderen drei Zähne in Eingriff mit der Verzahnung des Sperrrades gelangen. Durch die über das Gurtband auf die Gurtspule einwirkenden Abzugskräfte wird diese dann in Richtung der Verzahnung 38 verschoben, so dass die Verzahnung des Sperrrades mit dieser in Eingriff kommt. Befinden sich dann alle Zähne der Sperrklinke in Eingriff gelangt die Sperrklinke zur Anlage an die Anlagefläche 77. Ein weiteres Verschwenken und damit ein Verdrehen des Sperrrades werden dann verhindert.

## Patentansprüche

1. Gurtaufroller für Sicherheitsgurte von Kraftfahrzeugen, mit einem Gehäuserahmen aus Kunststoff, zur Aufnahme einer Gurtspule, wobei der Gehäuserahmen (10) als offener, U-förmiger Rahmen ausgebildet ist, wobei an der offenen Stirnseite des Gehäuserahmens (10) eine Verstärkungsplatte (59) aus Kunststoff befestigt ist, wobei der mittlere Schenkel (11) des Gehäuserahmens mit einer Befestigungsöffnung (46) versehen ist, **dadurch gekennzeichnet,**
**dass** die Biegesteifigkeit des mittleren Schenkels des Gehäuserahmens auf der der Befestigungsöffnung gegenüberliegenden Seite reduziert ist, und dass die Dicke des mittleren Schenkels (11) ausgehend von dem der Befestigungsöffnung (46) benachbarten oberen Ende (45) zum unteren Ende (48) hin abnimmt.

2. Gurtaufroller nach einem der vorangehenden Ansprüche, **dadurch gekennzeichnet, dass** an den Stirnseiten (51, 52) der seitlichen Schenkel Vertiefungen und/oder Vorsprünge (53, 54, 55, 56) ausgebildet sind, die mit entsprechenden Vertiefungen und/oder Vorsprüngen (57, 58, 60, 61) der Verstärkungsplatte zur Herstellung einer formschlüssigen Verbindung korrespondieren.

3. Gurtaufroller nach einem der vorangehenden Ansprüche, **dadurch gekennzeichnet, dass** der mittlere Schenkel (11) zumindest partiell mit einer Wabenstruktur (44) versehen ist.

4. Gurtaufroller nach einem der vorangehenden Ansprüche, **dadurch gekennzeichnet, dass** in den seitlichen Schenkeln kreisförmige Vertiefungen (30, 33) zur Lagerung der Gurtspule ausgebildet sind.

5. Gurtaufroller nach Anspruch 4, **dadurch gekennzeichnet, dass** zumindest eine der kreisförmigen Vertiefung (33) mit einer Verzahnung (38) versehen ist.

6. Gurtaufroller nach einem der vorangehenden Ansprüche, **dadurch gekennzeichnet, dass** der mittlere Schenkel (11) und/oder zumindest einer der seitlichen Schenkel (12, 13) des Gehäuserahmens mit Vorsprüngen (60, 61) und/oder Rastelementen (72, 73) zur Verdrehsicherung und/oder zur Lastaufnahme versehen ist.

7. Gurtaufroller nach einem der vorangehenden Ansprüche, **dadurch gekennzeichnet, dass** in dem Gehäuserahmen (10) eine Sperrklinke (37) gelagert ist, die mit einer direkt oder indirekt an einer Gurtspule angebrachten Sperrverzahnung (39) zusammenwirkt, , und dass in dem Gehäuserahmen (10) eine Anlagefläche (77) für die Sperrklinke ausgebildet ist, durch die der Schwenkweg der Sperrklinke (37) begrenzt wird.

8. Gurtaufroller nach einem der vorangehenden Ansprüche, **dadurch gekennzeichnet, dass** die an der Gurtspule angebrachte Sperrverzahnung mit einer weiteren im Gehäuserahmen ausgebildeten Verzahnung (38) zusammenwirkt.

9. Gurtaufroller nach einem der Ansprüche 7 bis 8, **dadurch gekennzeichnet, dass** in dem Gehäuserahmen eine an die Anlagefläche angrenzende Stützfläche (76) ausgebildet ist, dass die Stützfläche (76) die Sperrklinke (37) mit einem geringen Abstand umgibt, so dass die Sperrklinke erst bei Überschreiten einer vorgegebenen Last zur Anlage an diese Stützfläche gelangt.

10. Gurtaufroller nach einem der Ansprüche 7 bis 9, **dadurch gekennzeichnet, dass** die Sperrklinke (37) einen der Stützfläche (76) zugewandten Fußabschnitt (71) größerer Dicke (D) aufweist.

11. Gurtaufroller nach einem der vorangehenden Ansprüche, **dadurch gekennzeichnet, dass** die Sperrklinke (37) in einem Schenkel des Gehäuserahmens gelagert ist, und dass eine radial verlaufende Verbindungslinie zwischen der Achse der Gurtspule und einer Befestigungsstelle durch die Sperrklinke verläuft.

12. Gurtaufroller nach einem der vorangehenden Ansprüche, **dadurch gekennzeichnet, dass** an dem Gehäuserahmen (10) eine verstärkter Bereich ausgebildet ist, der die Stützfläche mit dem Befestigungsabschnitt verbindet.

13. Gurtaufroller nach einem der vorangehenden Ansprüche, **dadurch gekennzeichnet, dass** die Sperrklinke (37) eine Verzahnung (78) mit mindestens vier Zähnen aufweist.

14. Anordnung eines Gurtaufrollers nach Anspruch 1 und einer Gurtspule () für Sicherheitsgurte von Kraftfahrzeugen, **dadurch gekennzeichnet, dass** die offene Stirnseite und oder lichte Weite der beiden Seitenwände des Gehäuserahmens (10) deutlich schmäler ist als die zugehörige Gurtspule (14, 14/1).

## Claims

1. Belt retractor for safety belts of motor vehicles, with a housing frame made of plastic to receive a belt reel, wherein the housing frame (10) is formed as an open U-shaped frame, wherein a reinforcing plate (59) of plastic is attached on the open face of the housing frame (10), wherein the middle leg (11) of the housing frame is provided with a fixing opening (46), **characterized in that** the bending stiffness of the middle leg of the housing frame is reduced on the side opposite the fixing opening, and that the thickness of the middle leg (11) starting from the upper end (45) adjacent to the fixing opening (46) diminishes towards the lower end (48).

2. Belt retractor according to any of the preceding claims, **characterized in that** recesses and/or protrusions (53, 54, 55, 56) are formed on the faces (51, 52) of the side legs and correspond to similar recesses and/or protrusions (57, 58, 60, 61) on the reinforcing plate to create a form-fit connection.

3. Belt retractor according to any of the preceding claims, **characterized in that** the middle leg (11) is provided at least partially with a honeycomb structure (44).

4. Belt retractor according to any of the preceding claims, **characterized in that** circular recesses (30, 33) are provided in the side legs for mounting the belt reel.

5. Belt retractor according to claim 4, **characterized in that** at least one of the circular recesses (33) is fitted with a toothing (38).

6. Belt retractor according to any of the preceding claims, **characterized in that** the middle leg (11) and/or at least one of the side legs (12, 13) of the housing frame is fitted with protrusions (60, 61) and/or latching elements (72, 73) to prevent twisting and/or to receive loads.

7. Belt retractor according to any of the preceding claims, **characterized in that** a catch (37) is mounted in the housing frame (10) which cooperates with a latch toothing (39) arranged directly or indirectly on a belt reel, and that a contact surface (77) for the catch is formed in the housing frame (10) and limits the swivel travel of the catch (37).

8. Belt retractor according to any of the preceding claims, **characterized in that** the latch toothing provided on the belt reel cooperates with a further toothing (38) formed in the housing frame.

9. Belt retractor according to any of claims 7 to 8, **characterized in that** a support surface (76) adjacent to the contact surface is formed in the housing frame, that the support surface (76) surrounds the catch (37) with a slight distance so that the catch only comes to rest on this support surface after a predefined load has been exceeded.

10. Belt retractor according to any of claims 7 to 9, **characterized in that** the catch (37) has a foot surface (71) facing the support surface (76) and of greater thickness (D).

11. Belt retractor according to any of the preceding claims, **characterized in that** the catch (37) is mounted in a leg of the housing frame, and that a radially running connecting line runs between the axis of the belt reel and a fixing point through the catch.

12. Belt retractor according to any of the preceding claims, **characterized in that** a reinforced region is formed on the housing frame (10) which connects the support surface to the fixing portion.

13. Belt retractor according to any of the preceding claims, **characterized in that** the catch (37) has a toothing (78) with at least four teeth.

14. Arrangement of a belt retractor according to claim 1 and a belt reel () for safety belts of motor vehicles, **characterized in that** the open face or clear width between the two side walls of the housing frame (10) is significantly narrower than the associated belt reel (14, 14/1).

## Revendications

1. Enrouleur de ceinture pour ceintures de sécurité de véhicules automobiles, ayant un cadre de logement en matière plastique, destiné à recevoir une bobine de ceinture, dans lequel le cadre de logement (10) est formé sous la forme d'un cadre ouvert en forme de U, dans lequel une plaque de renforcement (59) en matière plastique est fixée au niveau de la face avant ouverte du cadre de logement (10), dans lequel la branche médiane (11) du cadre de logement est munie d' une ouverture de fixation (46), **caractérisé en ce que** la rigidité à la flexion de la branche médiane du cadre de logement est réduite sur le côté opposé à l'ouverture de fixation, et **en ce que** l'épaisseur de la branche médiane (11) diminue dans la direction allant de l'extrémité supérieure (45) voisine de l'ouverture de fixation (46) vers l'extrémité inférieure (48).

2. Enrouleur de ceinture selon la revendication précédente, **caractérisé en ce que** des évidements et/ou des saillies (53, 54, 55, 56) sont formés sur les faces avant (51, 52) des branches latérales, qui correspondent à des évidements et/ou des saillies correspondants (57, 58, 60, 61) de la plaque de renforcement pour mettre en oeuvre une liaison par correspondance de forme.

3. Enrouleur de ceinture selon l'une quelconque des revendications précédentes, **caractérisé en ce que** la branche médiane (11) est pourvue au moins partiellement d'une structure en nid d'abeilles (44).

4. Enrouleur de ceinture selon l'une quelconque des revendications précédentes, **caractérisé en ce que** dans les branches latérales, des évidements circulaires (30, 33) sont prévus pour la réception de la bobine de ceinture.

5. Enrouleur de ceinture selon la revendication 4, **caractérisé en ce qu'**au moins un évidement circulaire (33) est prévu ayant une denture (38).

6. Enrouleur de ceinture selon l'une quelconque des revendications précédentes, **caractérisé en ce que** la branche médiane (11) et/ou au moins l'une des branches latérales (12, 13) du cadre de logement est prévue ayant des saillies (60, 61) et/ou des éléments d'encliquetage (72, 73) pour empêcher une rotation et/ou pour supporter la charge.

7. Enrouleur de ceinture selon l'une quelconque des revendications précédentes, **caractérisé en ce qu'**un cliquet de blocage (37) est monté dans le cadre de logement (10), qui coopère directement ou indirectement avec une denture de blocage (39) agencée sur une bobine de ceinture, et **en ce que** dans le cadre de logement (10), une surface de contact (77) est formée pour le cliquet de blocage, par l'intermédiaire de laquelle la course du cliquet de blocage (37) est limitée.

8. Enrouleur de ceinture selon l'une quelconque des revendications précédentes, **caractérisé en ce que** la denture de blocage agencée sur la bobine de ceinture coopère avec une autre denture (38) formée dans le cadre de logement.

9. Enrouleur de ceinture selon l'une quelconque des revendications 7 à 8, **caractérisé en ce que** dans le cadre de logement, une surface d'appui (76) est agencée à proximité de la surface de contact, **en ce que** la surface d'appui (76) entoure le cliquet de blocage (37) à une faible distance, de sorte que le cliquet de blocage arrive seulement à appuyer sur cette surface d'appui en dépassant une charge prédéterminée.

10. Enrouleur de ceinture selon l'une quelconque des revendications 7 à 9, **caractérisé en ce que** le cliquet de blocage (37) présente une partie de pied (71) de plus grande épaisseur (D) en face de la surface d'appui (76).

11. Enrouleur de ceinture selon l'une quelconque des revendications précédentes, **caractérisé en ce que** le cliquet de blocage(37) est reçu dans une branche du cadre de logement, et **en ce qu'**une ligne de liaison s'étendant radialement s'étend entre l'axe de la bobine de ceinture et un point de fixation au travers du cliquet de blocage.

12. Enrouleur de ceinture selon l'une quelconque des revendications précédentes, **caractérisé en ce qu'**une partie renforcée est formée sur le cadre de logement (10), qui relie la surface d'appui et la partie de fixation.

13. Enrouleur de ceinture selon l'une quelconque des revendications précédentes, **caractérisé en ce que** le cliquet (37) présente une denture (78) ayant au moins quatre dents.

14. Agencement d'un enrouleur de ceinture selon la revendication 1, et d'une bobine de ceinture () pour des ceintures de sécurité de véhicules automobiles, **caractérisé en ce que** le côté avant ouvert et ou la lumière entre les deux parois latérales du cadre de logement (10) est sensiblement plus étroite que la bobine de ceinture associée (14, 14/1).
